# EUROPÄISCHE PATENTSCHRIFT

(11) **EP 0 896 846 B1**
(45) Veröffentlichungstag und Bekanntmachung des Hinweises auf die Patenterteilung: **13.11.2002**
(21) Anmeldenummer: 98115167.3
(22) Anmeldetag: 12.08.1998
(51) Int. Cl.: B23D 31/00

(54) **Beschneidwerkzeug**
Trimming apparatus
Dispositif à rogner

(30) Priorität: 14.08.1997 DE 19735237
(43) Veröffentlichungstag der Anmeldung: 17.02.1999
(73) Patentinhaber: Schuler Pressen GmbH & Co. KG, 73033 Göppingen (DE)
(72) Erfinder: Schuppler, Helmut, 73054 Eislingen (DE)

(56) Entgegenhaltungen:
- EP-A- 0 525 406
- DE-B- 1 119 211
- GB-A- 191 013 538

## Beschreibung

Die Erfindung betrifft ein Beschneidwerkzeug mit den Merkmalen des Oberbegriffs des Patentanspruchs 1.

An tiefgezogenen Werkstücken oder vergleichbaren, hohl ausgebildeten Werkstücken ist es häufig erforderlich, einen bei der Fertigung entstandenen oder von sonstigen Ursachen herrührenden Rand zu entfernen. Bspw. weisen runde, ovale oder mehrkantige Gehäuse, wie z. B. Radschüsseln, Getriebeteile, Pumpenräder, Gasflaschen usw. eine Wandung auf, deren Rand beschnitten werden muß, d.h. an vorgegebener Stelle abzuschneiden ist. Der Schnitt ist hier um den gesamten Umfang des betreffenden Werkstücks zu führen, wobei es häufig darauf ankommt, dass ein sauberer absatzfreier Schnitt und saubere Schnittflächen erzielt werden.

Aus der DE 3136753 C2 und der GB K13538, die den Oberbegriff des Patentanspruchs 1 offenbaren, ist ein Schnittwerkzeug bekannt, das an einer Tiefzieheinrichtung vorgesehen ist. Die Tiefzieheinrichtung enthält eine Werkstückaufnahme, die ortsfest an einer Grundplatte aufgeständert ist. Unterhalb der Werkstückaufnahme ist ein Ziehkissen angeordnet, das sowohl in Ziehrichtung niederdrückbar, als auch in Seitenrichtung bewegbar ist. Zur Bewegung in Seitenrichtung sind an den Seiten des Ziehkissens Hydraulikzylinder angeordnet, die sich an festen Wiederlager abstützen. An der Oberseite des Ziehkissens ist ein Schnittkörper angeordnet, der eine ringförmige Schneidkante aufweist. Diese definiert eine Öffnung, die etwas größer ist als der Durchmesser des Werkstücks. Außerdem ist an der Unterseite der Werkstückaufnahme eine zugeordnete Schneidkante ausgebildet. Um von dem Werkstück einen Rand abzuschneiden, wird das Ziehkissen nacheinander in vier verschiedenen Seitenrichtungen bewegt. Dabei wird durch Verschiebung in einer ersten Richtung zunächst ein Randabschnitt, nachfolgend der gegenüberliegende Randabschnitt, dann der dazwischenliegende Randabschnitt und letztendlich der noch verbleibende Randabschnitt durchtrennt.

Der Schnitt erfolgt in mehreren Etappen, was insgesamt eine relativ lange Bearbeitungszeit erfordert und zu Genauigkeitsproblemen führen kann.

Außerdem ist aus der US-PS 2.374.301 eine Beschneideinrichtung bekannt, die eine ortsfeste Werkstückaufnahme für becherförmige Werkstücke aufweist. Zum Beschneiden des Rands des becherförmigen Werkstücks sind radial bewegbare Schieber vorgesehen, die an ihrer Stirnseite jeweils eine Schneidkante aufweisen. Die Schieber sind über einen Nockenring betätigbar.

Auch hier erfolgt die Beschneidung des Randes in mehreren Etappen und zusätzlich noch mit separaten Schiebern oder Schnittstempeln, wodurch an dem beschnittenen Rand unerwünschte Absätze entstehen können.

Ein weiteres Schnittwerkzeug zum Abtrennen eines Endstücks von napfförmigen Werkstücken ist aus der DE 324234 C2 bekannt. Bei diesem Werkzeug erfolgt die Beschneidung des Rands des Werkstücks in zwei aufeinanderfolgenden Bearbeitungsstationen, in denen jeweils vier Schnittstempel angeordnet sind. Die jeweils gegeneinander um 90° versetzten Schnittstempel der ersten Station sind gegen die Schnittstempel der nachfolgenden Station um 45° versetzt. Alle Schnittstempel sind radial bewegbar, so dass die Durchtrennung des Randes des Werkstücks infolge der Radialbewegung jedes Schnittstempels stattfindet.

Die Randbeschneidung erfolgt in mehreren Etappen, wodurch Absätze entstehen können.

Im Gegensatz zu den Beschneidmaschinen die den Rand in einer mehrstufigen Vorgang schrittweise beschneiden und einzelne kürzere Abfallstücke erzeugen, ist aus Schnitt-, Stanz- und Ziehwerkzeuge, G. Oehler, Springer-Verlag Berlin/Göttingen/Heidelberg 1962, eine Vorrichtung für den Schüttelbeschneideschnitt bekannt, die von dem Werkstück einen ringförmigen Randbereich abtrennt. Das Schnittwerkzeug weist eine Werkstückaufnahme auf, die das Werkstück außen bis zur Höhe des abzuschneidenden Rands umschliesst. Die Aufnahme ist gegen die Kraft von Gegenhaltern vertikal nach unten bewegbar. Eine äußere Führung zwingt die Werkstückaufnahme dabei auf eine Spiralbahn. Zu dem Werkzeug gehört außerdem ein in das Werkstück einzuführendes Gegenstück, dessen Unterkante im Bereich der Oberkante der Werkstückaufnahme endet. Dieses Gegenstück wird beim Niederdrücken der Werkstückaufnahme axial geführt, wobei keine seitliche Bewegung möglich ist. Es entsteht infolge der Spiralbewegung der Werkstückaufnahme eine Relativbewegung zwischen dem Gegenhalter und der Werkstückaufnahme, wodurch der abzutrennende Werkstückrand abgeschert wird.

Dieses Beschneidewerkzeug ist relativ aufwendig.

Davon ausgehend ist es Aufgabe der Erfindung, ein Schnittwerkzeug zu schaffen, mit dem der Rand tiefgezogener oder anderweitiger hohl ausgebildeter Werkstücke auf einfache Weise schnell und präzise beschneidbar ist.

Diese Aufgabe wird mit dem Schnittwerkzeug gelöst, das die Merkmale des Patentanspruchs 1 aufweist.

Das Schnittwerkzeug weist einen Schnittkörper auf, der zur Beschneidung des Werkstückrandes eine Taumelbewegung ausführt. Diese führt zu einem durchgehenden Schnitt, der ohne abzusetzen in einem Zug ausgeführt wird. Neben einer kurzen Bearbeitungszeit kann dadurch auf einfache Weise ein absatzfreier Schnitt erzielt werden. Die Taumelbewegung des Schnittkörpers wird durch geeignete Getriebemittel ermöglicht, die zwischen den Antriebsorganen, der Antriebseinrichtung und dem Schnittkörper angeordnet sind. Die Getriebemittel erbringen vorzugsweise ein Zwangsführung des Schnittkörpers auf einer geeigneten Bahn. Diese kann bspw. eine Spiralbahn oder eine ähnliche Bahn sein. Auch andere Bahnen, die aus einer kurzen seitlichen Linearbewegung und einer sich daran anschliessenden Kreisbewegung zusammengesetzt sind, sind möglich. Wesentlich ist, dass zunächst ein Anschnitt an einer Stelle des Werkstücks erfolgt, von dem ausgehend der Schnitt um das Werkstück herum geführt wird. Der Schnitt erfolgt durch Scherwirkung, wobei der jeweils dem Scherprozeß unterworfene Materialbereich relativ kurz ist. Dadurch werden im Gegensatz zu Schnittwerkzeugen mit radial bewegten Schneidstempeln, deren jeweilige Schneidkante im Ganzen mit dem Werkstück in Eingriff kommt, relativ geringe Schnittkräfte erreicht. Dies ermöglicht es auch, relativ dickwandige Werkstücke zu beschneiden. Der Kraftaufwand ist dabei vergleichsweise gering, was die Werkzeugkosten senkt. Außerdem ist das erfindungsgemäße Schnittwerkzeug sehr einfach aufgebaut, was ebenfalls Kostenvorteile bewirkt. Bspw. ist der Schnittkörper ein einfaches ringförmiges Teil, das im Gegensatz zu Schnittwerkzeugen mit mehreren Schnittkörpern Kostenvorteile bringt.

Der Randschnitt erfolgt bei ruhendem Werkzeug, das zum Beschneiden nicht vertikal bewegt werden muss, wie es beim Stand der Technik der Fall ist. Dies erhöht die Genauigkeit und vereinfacht das Werkzeug.

Das erfindungsgemäße Schnittwerkzeug kann bei runden, ovalen oder mehrkantigen Gehäusen, wie bspw. Radschüsseln, Getriebeteilen, Pumpenrädern, Gasflaschen usw. Verwendung finden. Es ist sowohl in Verbindung mit Tiefzieheinrichtungen als auch als separate Einrichtung verwendbar.

Die Servomotoren können sowohl als Elektromotoren, als auch als Hydraulikmotoren ausgebildet sein. Letzteres bringt Vorteile, wenn ohnehin ein Hydraulikaggregat vorhanden ist. Die Servomotoren sind vorzugsweise von einer gemeinsamen Steuereinrichtung angesteuert, die den Bewegungsablauf koordiniert, und somit im Rahmen der von den Getriebemitteln gelassenen Möglichkeiten die Bahn bestimmt, die der Schnittkörper bei seiner Taumelbewegung zurücklegt. Die Steuereinrichtung kann Teil einer allgemeinen Pressensteuerung sein. Bspw. kann diese neben den entsprechenden hardwaremässigen Voraussetzungen einen Programmabschnitt enthalten, der veranlasst, dass die Servomotoren im richtigen Zeitpunkt in der gewünschten Weise angesteuert werden.

Als Getriebemittel kommen unterschiedliche Einrichtungen in Betracht. Vorzugsweise ist der erste Servomotor über einen Exzenter oder Kurbeltrieb mit dem Schnittkörper verbunden, während der zweite Servomotor über eine Kurbel- und eine Kulissenführung mit dem Schnittkörper verbunden ist. Zweckmäßigerweise sind beide Servomotoren und Getriebemittel aneinander gegenüberliegenden Seiten des Schnittkörpers angeordnet. Bei dieser Anordnung kann der von dem Kurbeltrieb des ersten Motors ausgehenden Kreisbewegung eine zweite Bewegungskomponente überlagert werden, die es ermöglicht, das Schnittwerkzeug auf die Mitte einer Umlaufbahn zu führen, womit die Schneidkante des Schnittkörpers insgesamt mit dem Werkstück außer Eingriff gebracht wird.

Anstelle der Kombination von Kurbeltrieb mit Kulissenführung sind auch zwei Kurbeltriebe möglich, die über im Winkel zueinander ausgerichtete Kulissenführungen mit dem Schnittwerkzeug verbunden sind. Dieses ist dann noch, bspw. über ein Teleskop, zusätzlich an einem Drehpunkt verankert, um eine Verdrehung um eine Vertikalachse zu vermeiden. Mit dieser Anordnung können beliebige Bahnen erzeugt werden die dann nur von der Steuereinrichtung bestimmt werden, wobei das Schnittwerkzeug hier auf einer Umlaufbahn geführt wird.

Falls erforderlich, kann der Schnittkörper aus mehreren Segmenten gebildet sein. Vorzugsweise ist er jedoch ein in sich geschlossener Ring mit einer absatzlosen Schneidkante. Diese kann der Kontur des Werkstücks angepasst sein. Dabei ist es besonders vorteilhaft, wenn an der Schneidkante eine radial nach innen vorstehende Ausbuchtung oder Nase ausgebildet ist, die den Anschnitt des Werkstücks ermöglicht. Ein solcher Vorsprung in dem Anschnittbereich der Schneidkante, d.h. dem Bereich, der mit dem Werkstück zuerst in Berührung kommt und das Werkstück zuerst durchdringen muß, bewirkt, dass der Anschnitt lediglich über einen kurzen Schneidkantenbereich erfolgt, was die dazu erforderliche Kraft senkt. Damit wird die den Servomotoren abverlangte Maximalkraft reduziert, so dass diese im Hinblick auf die ansonsten erforderliche Kraft nicht zu weit überdimensioniert werden müssen.

Das Schnittwerkzeug enthält außerdem ein Zerteilwerkzeug oder ist mit einem solchen kombiniert, mit dem der von dem Werkstück abgetrennte Rand in handhabbare Abfallstücke unterteilt wird. Zu dem Zerteilwerkzeug gehören vorzugsweise radial bewegbare Messer, die über Kulissenführungen mit dem taumelnd angetriebenen Schnittkörper verbunden sind. Führt dieser seine Taumelbewegung aus, führen die Messer eine Radialbewegung aus. Außerdem weist das Zerteilwerkzeug vorzugsweise mehrere radial bewegbare Spannwangen auf, die über Getriebemittel expandierbar sind. Die Getriebemittel können bspw. Schrägoder Keilflächen sein, die von einem vorzugsweise vertikal verschiebbar gelagerten Auswerfer oder Hochbringer her angetrieben sind. Der Auswerfer wird vor der Aufnahme des Werkstücks und dem Beschneiden des Werkstückrands nach unten gefahren, wobei die Spannwangen radial expandieren und den im vorausgehenden Arbeitsgang bereits abgetrennten, in dem Werkzeug liegenden Abfallrand spannen. Während der Schnittkörper seine Taumelbewegung ausführt und dabei einen weiteren Abfallrand abschneidet, zerteilen die radial bewegbaren Messer infolge der Taumelbewegung des Schnittkörpers den bereits abgetrennten und radial gehaltenen Abfallrand.

In der Zeichnung ist ein Ausführungsbeispiel der Erfindung veranschaulicht. Es zeigen:
Fig. 1 das Schnittwerkzeug in einer Längsschnittdarstellung, geschnitten entlang der Linie I-I in Figur 2,
Fig. 2 das Schnittwerkzeug nach Figur 1, in einer schematisierten Draufsicht,
Fig. 3 das kinematische Prinzip des Schnittwerkzeugs nach den Figuren 1 und 2, in einer schematischen Darstellung,
Fig. 4 das Schnittwerkzeug nach den Figuren 1 und 2, geschnitten entlang der Linie IV-IV in Figur 2, und
Fig. 5 Bewegungsabläufe des Schnittwerkzeugs nach den vorstehenden Figuren.

### Beschreibung:

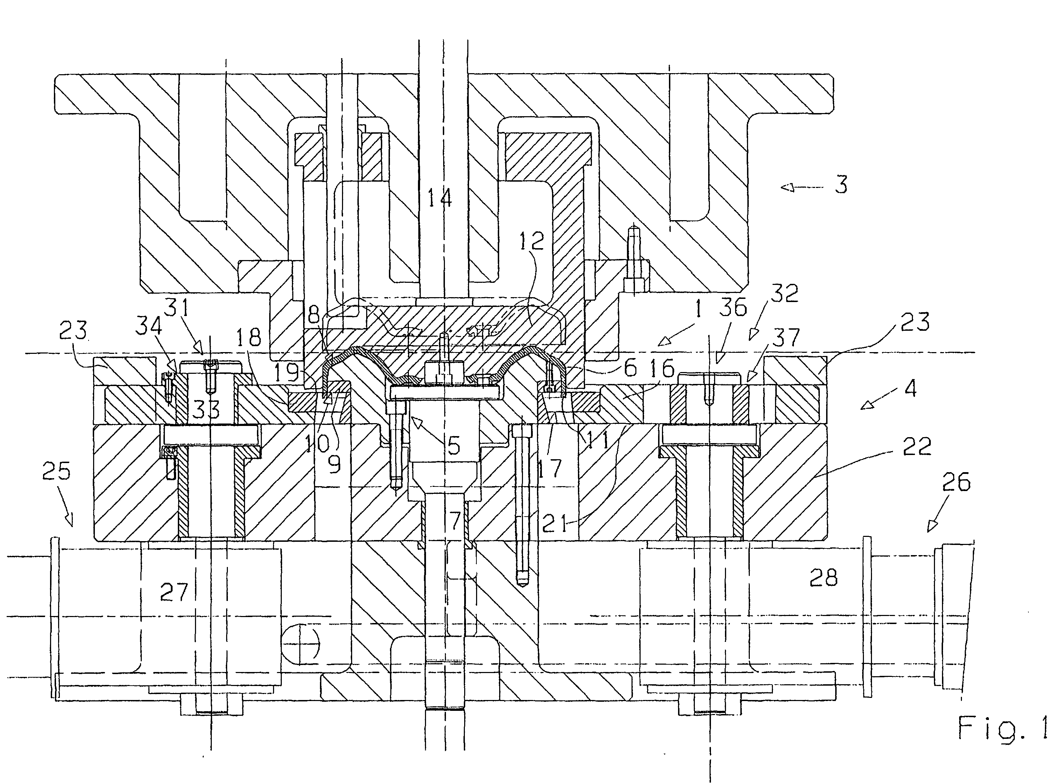

In Figur 1 ist ein mit einem Schnittwerkzeug 1 veranschaulicht, das in einer Presse oder in einer Pressenstufe angeordnet ist. Zu der im Einzelnen nicht weiter veranschaulichten Presse gehören ein vertikal bewegbarer Stößel, an dem ein Oberwerkzeug 3 gehalten ist, und ein Pressentisch, auf dem ein Unterwerkzeug 4 gelagert ist. Das Unterwerkzeug 4 weist einen pilzartigen Schnittstempel 5 auf, der der Aufnahme eines Werkstücks 6 dient. Der Schnittstempel 5 ist an dem Unterwerkzeug 4 fest gehalten und weist eine zentrale Öffnung auf, in der ein Hochbringer 7 angeordnet ist. Dieser ist vertikal beweglich angeordnet und mit einem nicht weiter dargestellten Antrieb verbunden, über den der Hochbringer 7 nach oben gefahren werden kann.

Der Schnittstempel 5 ist an seiner Oberseite mit einer Auflagefläche 8 versehen, die der Innenkontur des auf dem Schnittstempel 5 gelagerten Werkstücks 6 entspricht. An seiner Unterseite ist der Schnittstempel 5 mit einem ringförmigen Schneidenelement 9 versehen, an dessen unterer Begrenzung eine Schneidkante 10 ausgebildet ist. Das Werkstück 6 erstreckt sich mit einem Rand 11 über die Schneidkante 10 nach unten, wobei der hier vorhandene Bereich des Werkstücks 6 mit dem Schnittwerkzeug 1 abzutrennen ist.

Zu dem Oberwerkzeug 3 gehört ein Niederhalter 12, der eine der Außenkontur des Werkstücks 6 entsprechende Form aufweist und beim Abwärtshub des Stempels auf das Werkstück 6 aufgesetzt wird. Der Niederhalter 12 ist in dem übrigen Oberwerkzeug 3 verschiebbar gelagert. Über eine vertikal nach oben führende, endseitig mit dem Niederhalter 12 verbundene Stange 14 wird nach dem Aufsetzen des Niederhalters 12 auf das Werkstück 6 und bei weiterem Abwärtshub des Stößels eine definierte Kraft auf das Werkstück 6 ausgeübt.

Zu dem Schnittwerkzeug 1, das der Beschneidung des Werkstücks 6 dient, gehört eine Taumelplatte 16, die mit einer zentralen Öffnung 17 versehen ist, die den Schnittstempel 5 umgibt. An der Öffnung 17 ist ein als Schnittkörper dienender Schnittring 18 angeordnet, dessen Schneidkante 19 um die erforderliche Schneidspaltbreite gegen die Schneidkante 10 des Schneidenelements 9 nach unten versetzt angeordnet ist.

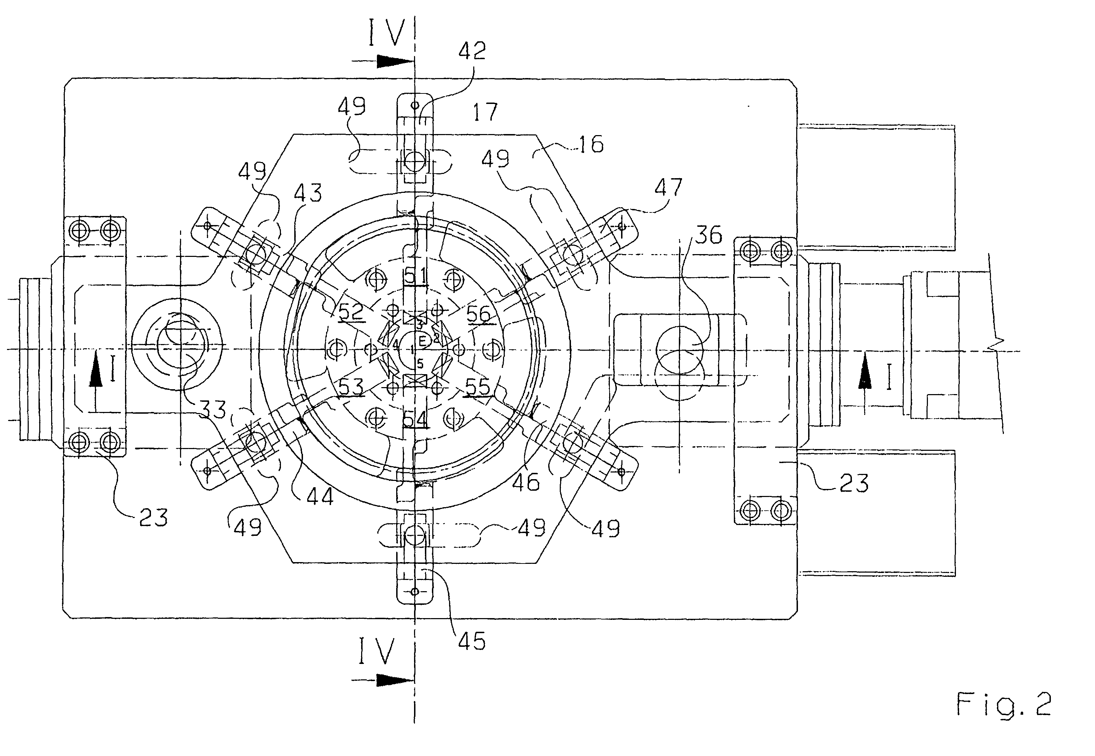

Die Taumelplatte 16 ist gleitend verschiebbar auf einer oberseitigen Planfläche 21 einer Grundplatte 22 angeordnet. Mit der Grundplatte 22 verbundene Niederhalterelemente 23 dienen dazu, die Taumelplatte 16 mit der Planfläche 21 der Grundplatte 22 in Anlage zu halten ohne sie festzuklemmen. Die Taumelplatte 16 ist seitlich, d.h. in Figur 2 sowohl nach oben und nach unten als auch nach rechts und links verschiebbar.

Im Ruhezustand nimmt die Taumelplatte 16 eine Position ein, in der der Schnittring 18 etwa konzentrisch zu dem Schnittstempel 5 steht, so dass der Rand des Werkstücks 6 frei in die Öffnung 17 ragen kann. Um diesen Rand abzuscheren, wird der Taumelplatte 16 eine Taumelbewegung erteilt. Dazu ist eine Antriebseinrichtung 24 vorgesehen, zu der zwei Servomotoren 25, 26 gehören. Die Servomotoren 25, 26 sind von einer nicht weiter dargestellten Steuereinrichtung gesteuerte Elektromotoren. Jedoch können bedarfsweise auch anderweitige Antriebsorgane, bspw. Hydraulikmotoren oder dgl. verwendet werden, die dann ebenfalls von der Steuereinrichtung gesteuert sind. Die von Winkelgetrieben 27, 28 gebildeten Abtriebe der Servomotoren 25, 26 sind über weitere Getriebemittel 31, 32 mit der Taumelplatte 16 verbunden. Das Getriebemittel 31 ist ein Exzenterantrieb zu dem ein Exzenter 33 gehört, der an der Grundplatte 22 drehbar gelagert und von dem Servomotor 25 angetrieben ist. Der Exzenter 31 ist über eine justierbare Exzenterbuchse 34 mit der Taumelplatte 16 verbunden und führt diese im Bereich der Exzenterbuchse 34 auf einer Kreisbahn, wenn der Servomotor 25 angesteuert wird.

Auf der Seite der Taumelplatte 16, die dem Servomotor 25 bezüglich der Öffnung 17 und des Schnittstempels 5 gegenüberliegt, ist der Servomotor 26 angeordnet. Dieser treibt über das Winkelgetriebe 28 ebenfalls einen Exzenter 36 an, der mit der Taumelplatte 16 über eine Kulissenführung 37 in Antriebsverbindung steht. Durch die Kulissenführung 37 wird lediglich die Querkomponente der Bewegung des Exzenters 36, d.h. in Figur 2 die nach oben bzw. nach unten gerichtete Bewegungskomponente übertragen. Die in Figur 2 nach rechts bzw. nach links gerichtete Bewegungskomponente wird dagegen ausschliesslich von dem Exzenter 33 vorgegeben.

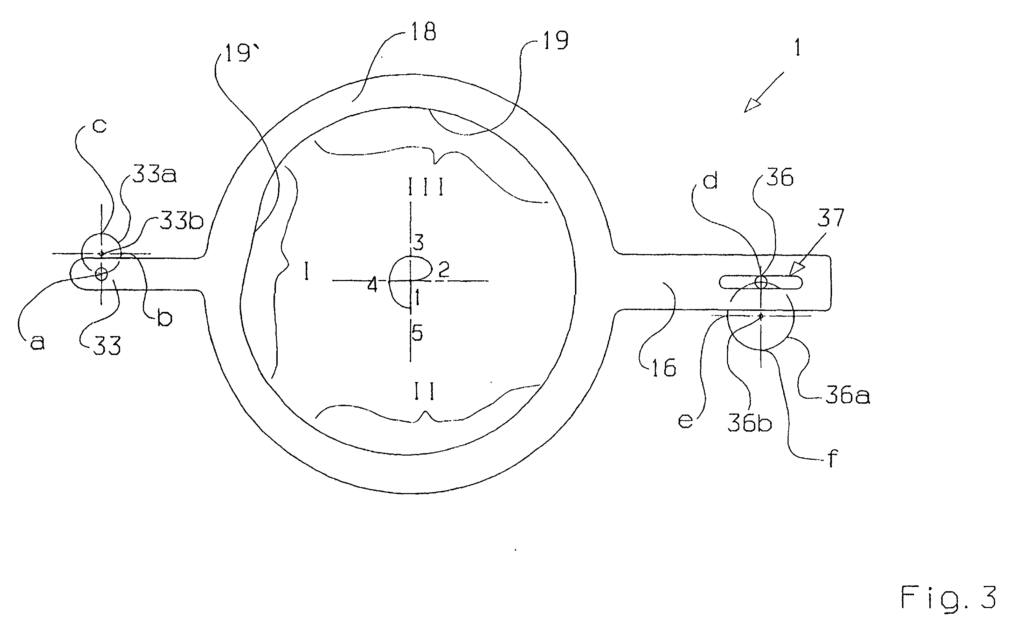

Das Funktionsprinzip des Schnittwerkzeugs 1 geht insbesondere aus Figur 3 hervor. Der Exzenter 33 ist hier lediglich anhand seiner Umlaufbahn 33a und seines Bahnmittelpunkts 33b veranschaulicht. Ähnlich ist der in der Kulissenführung 37 gelagerte Exzenter 36 anhand seiner Umlaufbahn 36a und seines Bahnmittelpunkts 36b veranschaulicht. Die erfindungsgemäße Schneideinrichtung 1 arbeitet demnach wie folgt:

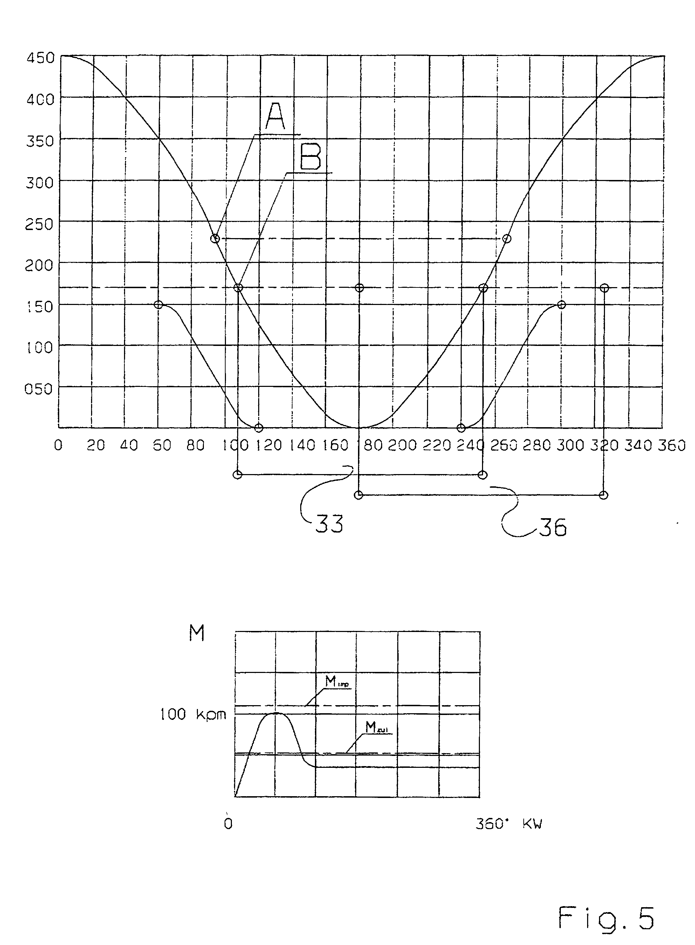

Ist bei zunächst offenem Werkzeug das Werkstück 6 auf dem Schnittstempel 5 plaziert, fährt der Stößel nach unten, wobei der Niederhalter 12 auf dem Werkstück 6 aufsetzt und dieses fest an den Schnittstempel 5 andrückt. Gemäß Figur 5 setzt der Niederhalter bei einem Drehwinkel der Presse von etwa 90° bei A auf das Werkstück 6 auf. Bei etwa 110° (B) ist das Werkstück 6 fest gehalten und der Niederhalter 12 in das Oberwerkzeug 3 eingedrückt. Währenddessen befindet sich der Hochbringer 7 in dem unteren Totpunkt.

Zu diesem Zeitpunkt beginnt der Exzenter 33 seine Drehung, wobei er in einer gleichförmigen Drehbewegung aus seinem Anfangspunkt a zunächst in den Bahnpunkt b und von dort gleichförmig zu dem Bahnpunkt c dreht. Während der Exzenter 33 dabei einen Halbkreis durchläuft, steht der Exzenter 36 in Ruhe in seinem Bahnpunkt d. Entsprechend durchläuft die Taumelplatte 16 mit jedem Punkt ihrer Schneide 19 die im Zentrum der Taumelplatte 16 veranschaulichte Kurve von Punkt eins über Punkt zwei zu Punkt drei. Dabei schneidet zunächst der Bereich I der Schneidkante 19 in das Werkstück 6 ein, wobei bei Bahnpunkt Nr. 3 etwa der Bereich II der Schneidkante 19 den Rand des Werkstücks 6 durchtrennt.

Erreicht der Exzenter 33 den Bahnpunkt c und somit jeder Schneidenpunkt den Punkt 3 der Bewegungskurve, wird der Exzenter 36 gestartet, wobei er sich von seinem Bahnpunkt d beginnend synchron mit dem Exzenter 33 über Punkt e zu Punkt f bewegt. Weil beide Exzenter 33, 36 synchron laufen, wird die Taumelplatte 16 nun von Bahnpunkt 3 über Bahnpunkt 4 auf einem Halbkreis zu Bahnpunkt 5 geführt. Dabei wird der Punkt, bei dem die Schneidkante 19 den Rand des Werkstücks 6 abtrennt, zu dem Schneidenbereich III geführt. Der Rand des Werkstücks ist nun vollständig abgetrennt. Um den Schnittring 18 außer Eingriff mit dem Werkstück 6 zu bringen, wird der Exzenter 33 in seinem Bahnpunkt a angehalten und der Exzenter 36 läuft von seinem Bahnpunkt f zu seinem Bahnpunkt d weiter, wobei die Taumelplatte 16 einen etwa geraden Weg von Kurvenpunkt 5 zu Kurvenpunkt 1 durchläuft. Der Rand 11 des Werkstücks 6 ist nun vollständig abgetrennt und fällt nach unten. Die Taumelplatte 16 steht mit ihrer Öffnung 17 wieder koaxial zu dem Schnittstempel 5 und dem Werkstück 6, so dass nach Öffnen des Werkzeugs und Hochfahren des Hochbringers 7 ein neues Werkstück eingesetzt und in dem Schnittwerkzeug 1 behandelt werden kann.

Bedarfsweise kann in dem Bereich I der Schneikante 19 ein Vorsprung 19' ausgebildet sein, der den Anschnitt des Werkstücks 6 erleichtert. Figur 5 veranschaulicht in dem unteren Diagramm den Kraftverlauf an dem Exzenter 33. Zu Beginn der Drehung ist ein erhöhtes Drehmoment zu verzeichnen, das durch den Anschnitt zustande kommt. Durch den Vorsprung 19' kann das für den Anschnitt erforderliche Drehmoment auf einen Wert unter dem zulässigen Impulsdrehmoment Mᵢₘₚ reduziert werden. Dies gelingt deshalb, weil mit dem Vorsprung 19' der Rand 11 des Werkstücks 6 zu Beginn des Beschneidvorgangs zunächst auf einer geringeren Breite durchtrennt wird, als es bei einem exakt der Werkstückkontur entsprechenden Verlauf der Schneidkante 19 der Fall wäre.

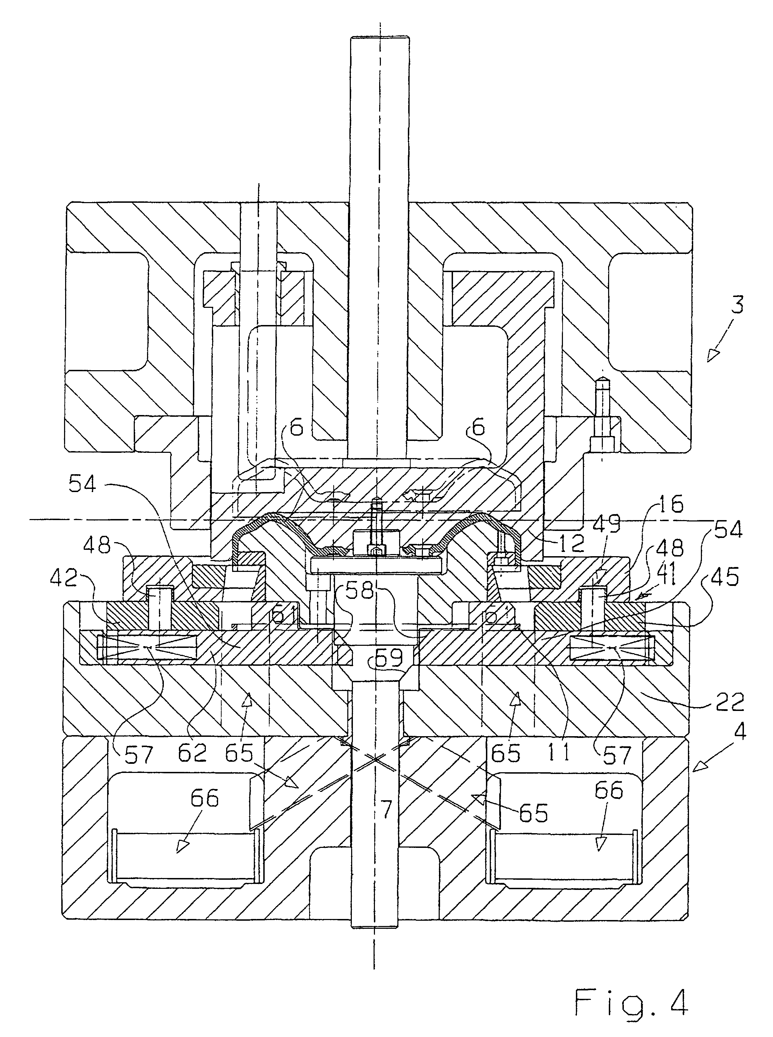

Aus Figur 4 geht eine unterhalb des Schnittwerkzeug angeordnetes Zerteilwerkzeug 41 hervor. Zu diesem gehören außerdem die aus Figur 2 ersichtlichen, radial bewegbar gelagerten Schieber 42, 43, 44, 45, 46 und 47, die im 60° Abstand radial verschiebbar in entsprechenden Nuten der Grundplatte 22 gelagert sind. Die Schieber 42 bis 47 können dabei radial nach innen vorgeschoben werden, wobei sie in dieser Position mit ihren Stirnkanten einen Kreis festlegen, dessen Durchmesser deutlich geringer ist als der Durchmesser der Schneidkante 10.

Die Schieber 42 bis 47 sind unter der Taumelplatte 16 angeordnet und weisen jeweils einen nach oben stehenden Zapfen 48 auf. Dieser greift jeweils den eine rechtwinklig zu dem jeweiligen Schieber 42 bis 47 orientierte Nut 49, die an der Unterseite der Taumelplatte 16 ausgebildet ist. Jede Nut 49 ist dabei vorzugsweise gerade ausgebildet und erstreckt sich etwa tangential zu einem gedachten, zu der Öffnung 17 koaxialen Kreis. Dadurch wird jeweils die Radialkomponente der Taumelbewegung der Taumelscheibe 16 auf die Schieber 42 bis 47 übertragen.

Unterhalb der Schieber 42 bis 47 sind weitere radial bewegbare Schieber 51 bis 56 angeordnet. Jeder dieser Schieber 51 bis 56 ist jeweils über eine Feder 57 radial nach innen vorgespannt. An ihrer Innenseite sind die Schieber 51 bis 56 mit Schrägflächen 58 versehen, die mit einer entsprechenden Keilfläche 59 des Hochbringers zusammenwirken. In Figur 4 ist der Schieber 51 in seiner radial nach innen verschobenen Position dargestellt, die er einnimmt, wenn der Hochbringer 7 in seiner oberen Position befindlich ist. Der in der rechten Seite der Figur 4 veranschaulichte Schieber 54 ist in seiner radial äußeren Position veranschaulicht, die er einnimmt, wenn der Hochbringer 7 von dem Oberwerkzeug 3 bzw. dem Werkstück 6 niedergedrückt oder von enem Antrieb abgesenkt ist.

Alle Schieber 51 bis 56 weisen jeweils radial innen eine Wange 61 auf, die an ihrer radial äußeren Seite eine vertikal orientiere Schneidkante trägt. Jede Wange 61 ist auf der gleichen Höhe angeordnet wie die Schieber 42 bis 47, die jeweils ebenfalls eine vertikale Schneidkante aufweisen.

Das insoweit beschriebene Zerteilwerkzeug 41 arbeitet wie folgt:

Zunächst wird davon ausgegangen, dass der Hochbringer 7 in seiner unteren Vertikalposition steht, wobei das Werkstück in seiner in Figur 4 schraffiert veranschaulichten Position befindlich ist. Die Schieber 51 bis 56 sind dadurch in ihrer radial äußeren Position, wodurch ihre Vorsprünge 61 in den Aufnahmeraum ragen. Die Taumelplatte 16 steht ebenfalls zentriert, wodurch alle Schieber 42 bis 47 in einer Radialposition stehen, in der sie, wie aus Figur 4 hervorgeht, einen relativ großen Zwischenraum zu den Wangen 61 der Schieber 51 bis 56 definieren. Die Taumelplatte 16 wird nun mittels der Servomotore 25, 26 auf ihrer Taumelbahn geführt. Der dadurch abgetrennte deformierte Rand fällt auf die Vorsprünge 61. Sobald das Werkzeug 2 öffnet und der Hochbringer 7 nach oben fährt, gleiten die Schieber 51 bis 56 nach innen und geben den Aufnahmeraum frei. Der ringförmige abgetrennte Rand 11' des zuvor von dem Schnittwerkzeug 1 bearbeiteten Werkstücks 6 fällt nun in den Aufnahmeraum. Wird der Hochbringer 7 jetzt nach unten bewegt, expandiert der Niederhalter 7 mit seiner Keilfläche 59 die Schieber 51 bis 56, so dass sich die Wangen 61 innen her an den Schnittrand 11' anlegen. Der Schnittrand ist nun fest aufgenommen und die Servomoteren 25, 26 werden angesteuert, so dass die Taumelscheibe 16 eine Taumelbewegung ausführt. Dabei werden nacheinander alle Schieber 42 bis 47 radial nach innen geführt, wobei sie jeweils unter Zusammenwirkung mit der zugeordneten Wange 61 den ringförmigen abgetrennten Rand 11' zerteilen. Dieser ist, nachdem die Taumelscheibe 16 ihre aus Figur 3 ersichtliche, etwa spiralförmige Bahn durchlaufen hat, in sechs Einzelstücke aufgetrennt. Diese können durch Abfallschächte 65 nach unten auf Bandförderer 66 fallen und werden von diesem abtransportiert.

Wegen des relativ großen Freiraums 62 zwischen in Ruhestellung befindlichen Schiebern 51 bis 56 und Wangen 61 kann ein abgetrennter Rand 11 unabhängig davon, ob er mehr oder weniger verbogen ist, nach unten in den Bereich der so gebildeten Scheren fallen. Bei dem nachfolgenden Beschneidvorgang wird er in Einzelteile zertrennt. Die von innen nach außen bewegten Wangen stellen dabei eine sichere Aufnahme des zu trennenden Rings sicher.

Zur Beschneidung von tiefgezogenen oder anderweitigen hohl ausgebildeten Werkstücken 6 dient ein Schnittwerkzeug 1, das mit einem Zerteilwerkzeug 41 kombiniert ist. Das Schnittwerkzeug 1 wird im Wesentlichen durch eine Taumelplatte 16 gebildet, die eine ringförmige Schneidkante 19 aufweist und von zwei Servomotoren 25, 26 angetrieben ist. Der Antrieb erfolgt bei einem Servomotor 25 über eine Exzenter 33 und bei dem anderen Servomotor 26 über eine Kulissenführung 37. Die Taumelplatte 16 treibt außerdem radial zu bewegende Messer oder Schieber 41 bis 47 an, denen radial in Gegenrichtung zu bewegende Schieber 51 bis 56 gegenüberstehen. Diese werden anderweitig, bspw. über einen mit entsprechenden Schrägflächen 59 versehenen Hochbringer 7 angetrieben. Durch die gegenläufige Bewegung der Schieber 42 bis 47 und der Schieber 51 bis 56 kann ein breiter Aufnahmebereich 42 für das ringförmige Abfallstück 11' erhalten werden, so dass das Abfallstück 11' problemlos aufgenommen und zerteilt werden kann, auch wenn es mehr- oder weniger deformiert ist.

## Patentansprüche

1. Schnittwerkzeug (1), insbesondere zum Beseitigen von Rändern von Tiefziehteilen,
mit einer Aufnahmeeinrichtung (5) zur Aufnahme und Halterung eines Werkstücks (6),
mit wenigstens einem Schnittkörper (18), der in Bezug auf die Aufnahmeeinrichtung (5) in wenigstens zwei Richtungen beweglich gelagert ist,
mit einer Antriebseinrichtung (24), die zwischen der Aufnahmeeinrichtung (5) und dem Schnittkörper (18) wirkt und zu der wenigstens zwei Antriebsorgane (25, 26) für eine erste Richtung und eine dazu rechtwinklig orientierte zweite Richtung gehören,
**dadurch gekennzeichnet,**
**dass** die zu der Antriebseinrichtung (24) gehörenden Antriebsorgane (25, 26) durch einen ersten und einen zweiten eine Drehbewegung erzeugenden Servomotor (25, 26) gebildet sind, und
**dass** die Servomotoren (25, 26) über Getriebemittel (31, 32) mit dem Schnittkörper (18) verbunden sind, die die Drehbewegung der Servomotore (25, 26) in eine Taumelbewegung umwandeln, die der Schnittkörper (18) ausführt, um von dem Werkstück (6) einen zu entfernenden Abschnitt (11) abzutrennen.

2. Schnittwerkzeug nach Anspruch 1, **dadurch gekennzeichnet, dass** die Servomotoren (25, 26) von einer gemeinsamen Steuereinrichtung angesteuert sind.

3. Schnittwerkzeug nach Anspruch 1, **dadurch gekennzeichnet, dass** die Getriebemittel (31, 32), über die die Servomotoren (25, 26) mit dem Schnittkörper (18) verbunden sind, die Umwandlung einer von dem Servomotor (25, 26) erzeugten Drehbewegung in eine Bewegung ermöglichen, die eine Linearkomponente enthält.

4. Schnittwerkzeug nach Anspruch 1, **dadurch gekennzeichnet, dass** der erste Servomotor(25) mit dem Schnittkörper (18) über ein Exzentergetriebe (33) verbunden ist.

5. Schnittwerkzeug nach Anspruch 1, **dadurch gekennzeichnet, dass** der zweite Servomotor (26) abtriebsseitig einen Exzenter (36) aufweist, der mit dem Schnittkörper (18) über eine Kulissenführung (37) verbunden ist.

6. Schnittwerkzeug nach Anspruch 1, **dadurch gekennzeichnet, dass** die Servomotoren (25, 26) an einander gegenüberliegenden Seiten des Schnittkörpers (18) angreifend angeordnet sind.

7. Schnittwerkzeug nach Anspruch 1, **dadurch gekennzeichnet, dass** der Schnittkörper (18) von der Antriebseinrichtung (24) auf einer Spiralbahn geführt wird.

8. Schnittwerkzeug nach Anspruch 1, **dadurch gekennzeichnet, dass** der Schnittkörper (18) ringförmig ausgebildet ist.

9. Schnittwerkzeug nach Anspruch 1, **dadurch gekennzeichnet, dass** der Schnittkörper (18) eine in sich geschlossene Schneidkante (19) aufweist.

10. Schnittwerkzeug nach Anspruch 1, **dadurch gekennzeichnet, dass** der Schnittkörper (18) eine Schneidkante (19) aufweist, deren Kontur der Form des Werkstücks (6) angepaßt ist, wobei der Schneidkantenbereich (I), der bei einem Beschneidvorgang zuerst mit dem Werkstück (6) in Berührung gebracht wird, vorspringend (19') ausgebildet ist.

11. Schnittwerkzeug nach Anspruch 1, **dadurch gekennzeichnet, dass** zum Zerteilen ringförmiger oder sperriger, von dem Schnittwerkzeug (1) abgetrennter Abfallstücke (11') mehrere radial beweglich gelagerte Schieber (42 bis 47) vorgesehen sind, die von dem Schnittkörper (18) angetrieben sind, der seinerseits taumelnd angetrieben ist.

12. Schnittwerkzeug nach Anspruch 11, **dadurch gekennzeichnet, dass** den Schiebern (42 bis 47) radial beweglich gelagerte Spannwangen (61) zugeordnet sind, die über Getriebemittel (58, 59) vor dem Zerteilen des Abfallstücks (11') expandierbar und zur besseren Aufnahme des Abfallstück (11') rückziehbar sind.

## Claims

1. Cutting tool (1), in particular for removing edges of deep-drawn parts, having a locating device (5) for locating and mounting a workpiece (6), having at least one cutting body (18) which is mounted so as to be movable in at least two directions with respect to the locating device (5), having a drive device (24) which acts between the locating device (5) and the cutting body (18) and belonging to which are at least two drive members (25, 26) for a first direction and a second direction oriented at right angles thereto, **characterized in that** the drive members (25, 26) belonging to the drive device (24) are formed by a first and a second servomotor (25, 26) producing a rotary movement, and **in that** the servomotors (25, 26) are connected to the cutting body (18) via transmission means (31, 32) which convert the rotary movement of the servomotors (25, 26) into a wobbling movement which the cutting body (18) performs in order to cut off a section (11), which is to be removed, from the workpiece (6).

2. Cutting tool according to Claim 1, **characterized in that** the servomotors (25, 26) are activated by a common control device.

3. Cutting tool according to Claim 1, **characterized in that** the transmission means (31, 32), via which the servomotors (25, 26) are connected to the cutting body (18), enable a rotary movement produced by the servomotor (25, 26) to be converted into a movement which contains a linear component.

4. Cutting tool according to Claim 1, **characterized in that** the first servomotor (25) is connected to the cutting body (18) via an eccentric drive (33).

5. Cutting tool according to Claim 1, **characterized in that** the second servomotor (26) has an eccentric (36) on the output side, this eccentric (36) being connected to the cutting body (18) via a link guide (37).

6. Cutting tool according to Claim 1, **characterized in that** the servomotors (25, 26) are arranged so as to act on opposite sides of the cutting body (18).

7. Cutting tool according to Claim 1, **characterized in that** the cutting body (18) is guided on a spiral path by the drive device (24).

8. Cutting tool according to Claim 1, **characterized in that** the cutting body (18) is of annular design.

9. Cutting tool according to Claim 1, **characterized in that** the cutting body (18) has a cutting edge (19) closed upon itself.

10. Cutting tool according to Claim 1, **characterized in that** the cutting body (18) has a cutting edge (19) whose contour is adapted to the shape of the workpiece (6), the cutting-edge region (I) which is brought into contact with the workpiece (6) first during a trimming operation being designed in a projecting manner (19').

11. Cutting tool according to Claim 1, **characterized in that** a plurality of slides (42 to 47) mounted so as to be radially movable are provided for dividing annular or bulky scrap pieces (11') cut off by the cutting tool (1), which slides (42 to 47) are driven by the cutting body (18), which in turn is driven in a wobbling manner.

12. Cutting tool according to Claim 11, **characterized in that** clamping cheeks (61) mounted so as to be radially movable are assigned to the slides (42 to 47), which clamping cheeks (61), via transmission means (58, 59), can be expanded before the dividing of the scrap piece (11') and can be retracted for receiving the scrap piece (11') more effectively.

## Revendications

1. Outil de coupe (1), notamment pour enlever des bords de pièces embouties, comprenant
un dispositif de positionnement (5) destiné à recevoir et à tenir une pièce (6),
au moins un corps de coupe (18) qui est monté mobile par rapport au dispositif de positionnement (5) dans au moins deux directions,
un dispositif d'entraînement (24) qui agit entre le dispositif de positionnement (5) et le corps de coupe (18) et auquel appartiennent au moins deux organes d'entraînement (25, 26) pour une première direction et pour une deuxième direction orientée perpendiculairement à la première,
**caractérisé**
**en ce que** les organes d'entraînement (25, 26) appartenant au dispositif d'entraînement (24) sont formés par un premier et un second servomoteur (25, 26) qui produisent un mouvement de rotation, et
**en ce que** les servomoteurs (25, 26) sont reliés au corps de coupe (18) par des moyens de transmission (31, 32) qui transforment le mouvement de rotation des servomoteurs (25, 26) en un mouvement oscillant que le corps de coupe (18) exécute pour séparer un morceau (11) qu'il s'agit d'enlever de la pièce (6).

2. Outil de coupe selon la revendication 1, **caractérisé en ce que** les servomoteurs (25, 26) sont pilotés par un dispositif de commande commun.

3. Outil de coupe selon la revendication 1, **caractérisé en ce que** les moyens de transmission (31, 32) par l'intermédiaire desquels les servomoteurs (25, 26) sont reliés au corps de coupe (18) permettent la transformation d'un mouvement de rotation produit par le servomoteur (25, 26) en un mouvement qui comprend une composante linéaire.

4. Outil de coupe selon la revendication 1, **caractérisé en ce que** le premier servomoteur (25) est relié au corps de coupe (18) par l'intermédiaire d'un mécanisme à excentrique (33).

5. Outil de coupe selon la revendication 1, **caractérisé en ce que** le deuxième servomoteur (26) comporte, côté sortie, un excentrique (36) qui est relié au corps de coupe (18) par l'intermédiaire d'un guide de coulisse (37).

6. Outil de coupe selon la revendication 1, **caractérisé en ce que** les servomoteurs (25, 26) sont disposés pour attaquer des côtés mutuellement opposés du corps de coupe (18).

7. Outil de coupe selon la revendication 1, **caractérisé en ce que** le corps de coupe (18) est guidé sur une trajectoire spirale par le dispositif d'entraînement (24).

8. Outil de coupe selon la revendication 1, **caractérisé en ce que** le corps de coupe (18) est de forme annulaire.

9. Outil de coupe selon la revendication 1, **caractérisé en ce que** le corps de coupe (18) comporte une arête tranchante (19) fermée sur elle-même.

10. Outil de coupe selon la revendication 1, **caractérisé en ce que** le corps de coupe (18) comporte une arête tranchante (19) dont le contour est adapté à la forme de la pièce (6), la région (I) de l'arête tranchante qui est mise initialement en contact avec la pièce (6) lors d'une opération de coupe étant en saillie vers l'avant (19').

11. Outil de coupe selon la revendication 1, **caractérisé en ce que**, pour découper des chutes (11') annulaires ou de forme compliquée séparées par l'outil de coupe (1), il est prévu plusieurs coulisseaux (42 à 47) montés mobiles dans une direction radiale, qui sont entraînés par le corps de coupe (18), lequel est lui-même entraîné en mouvement oscillant.

12. Outil de coupe selon la revendication 11, **caractérisé en ce que**, aux coulisseaux (42 à 47), sont associées des joues de serrage (61) montées mobiles dans une direction radiale, qui peuvent être écartées avant le découpage de la chute (11') et rétractées pour mieux positionner la chute (11'), par l'intermédiaire de moyens de transmission (58, 59).
